# EUROPEAN PATENT APPLICATION

(11) **EP 4 718 549 A1**
(43) Date of publication of application: **01.04.2026**
(21) Application number: 24913377.8
(22) Date of filing: 24.12.2024
(51) Int. Cl.: H01M 10/04, H01M 50/211, H01M 50/249, H01M 50/258, H01M 50/507, H01M 50/264, H01M 50/505

(54) **BATTERY CELL STACKING ASSEMBLY AND METHOD FOR MANUFACTURING SAME**

(30) Priority: 26.12.2023 KR 20230190992; 30.01.2024 KR 20240014423; 21.05.2024 KR 20240065829
(71) Applicant: LG Energy Solution, Ltd., Seoul 07335 (KR)
(72) Inventor: KIM, Heesung, Daejeon 34122 (KR); HAM, Jiwon, Daejeon 34122 (KR); LEE, Jaechul, Daejeon 34122 (KR); LEE, Jungwoo, Daejeon 34122 (KR); SEUNG, Kyung Bae, Daejeon 34122 (KR)
(74) Representative: Plasseraud IP
(86) International application number: PCT/KR2024/021070
(87) International publication number: WO 2025/143770

(57) **Abstract**

Provided are a battery cell stacking assembly and a method for manufacturing same. A battery cell stacking assembly according to one aspect of the present specification comprises: a plurality of plate-shaped battery cells stacked in a horizontal first direction; and side beams coupled to one side and the other side of the plurality of plate-shaped battery cells in the horizontal first direction.

## Description

### Technical Field

The present disclosure relates to a battery cell stack assembly and a method for manufacturing the same. More specifically, the present disclosure relates to a battery cell stack assembly and a method for manufacturing the same by which space efficiency within a pack housing is improved and at the same time the process efficiency in a battery pack manufacturing is improved by removing a module frame applied in the existing battery module.

### Background Art

Secondary batteries with high electrical properties such as high energy density and high applicability according to product group are widely used in portable devices as well as electric cars and power storage devices driven by electrical power sources.

The secondary batteries are attracting attention as a new energy source for improving environmental friendliness and energy efficiency not only because the secondary batteries have the primary advantage of dramatically reducing the use of fossil fuels, but also because the secondary batteries produce no by-products from energy use.

Small mobile devices use one, two or three battery cells per device, but medium and large devices such as automobiles require high output and large capacity. Therefore, medium to large-sized battery modules are used, which electrically connect multiple battery cells.

It is preferable that the medium to large-sized battery modules to be manufactured with the smallest possible size and weight, and thus square batteries and pouch-type batteries that can be stacked with high integration and have small weight per capacity are mainly used as battery cells for medium to large-sized battery modules.

In the pouch-type batteries, a number of battery cells are configured to be electrically connected to each other in series and/or parallel. For example, a number of battery cells are stacked in an erected state to form a battery cell stack, the cell stack is wrapped in a metal frame and modularized (in other words, battery module), and then the battery module may be used alone, or two or more battery modules can be electrically connected in series and/or parallel to form a higher-level device such as a battery pack.

However, in the existing battery module method, the module frame (for example, a metal frame) to enclose the battery cells takes up space within the pack housing, and thus space efficiency within the pack housing is poor and there is a limit to the reduction in energy density of the battery pack.

Meanwhile, in order to overcome the limitation of the battery module method, recently introduced is a cell to pack (CTP) manner in which a battery module is not configured, and a plurality of plate battery cells are stacked and mounted directly into the pack housing. In the CTP manner, stacked battery cells must be mounted in the pack housing while being pressurized to a certain level, and in the existing technology, there is the lack of an effective process for pressurizing and mounting laminated battery cells into a pack housing, which limits improvements in process efficiency.

### BRIEF DESCRIPTION

### Technical Goals

The task that the present disclosure seeks to solve is to provide a process in which, during the manufacturing process of a battery pack, the battery cell stack assembly is mounted in a pressurized state within the pack housing without the module frame applied to the existing battery modules, and to provide a battery cell stack assembly and a method of manufacturing the same by which improved is space efficiency inside the pack housing, energy density of the battery pack, and process efficiency of battery pack manufacturing.

### Technical Solutions

According to an aspect of the present disclosure to achieve the task, provided is a battery cell stack assembly including a plurality of plate battery cells stacked in a horizontal first direction, and side beams jointed to one side and another side of the plurality of plate battery cells in the horizontal first direction.

Through this, internal space efficiency of the pack housing and the energy density of the battery pack can be improved, and further the process efficiency of battery pack manufacturing can be improved.

Further, the side beam may include a plate part of a plate type, and a mounting part protruding from the plate part to an opposite side of the plurality of plate battery cells, and mounting holes may be formed in a vertical direction in the mounting part.

Further, the mounting part may extend in a horizontal second direction orthogonal to the horizontal first direction.

Further, the mounting part may be formed at a position higher than a middle height of the plate part.

Further, the side beam may include a cover part provided on an upper portion of the mounting part, and the cover part may include a top surface extending from the plate part to the opposite side of the plurality of plate battery cells, and a side surface extending from an edge of the top surface to a lower portion and connected to a surface of the upper portion of the mounting part.

Further, the side beam may include a grip hole formed by vertically penetrating the mounting part, and the grip hole may be a square shape with a rounded vertex.

Further, included may be a busbar frame assembly joined to one side and another side of the plurality of plate battery cells in the horizontal second direction orthogonal to the horizontal first direction, the busbar frame assembly may include a pin protruding from each of the one side and the another side of the busbar frame assembly in the horizontal first direction, and a hole into which the pin is inserted may be formed in the side beam.

Further, the pin may have a chamfered shape at a corner of an end.

Further, the pin may include a part of which cross section becomes smaller as it gets farther away from the busbar frame assembly.

Further, the side beam may be bonded to the plurality of plate battery cells by an adhesive.

According to an aspect of the present disclosure to achieve the task, provided is a method of manufacturing a battery cell stack assembly comprising a plurality of plate battery cells stacked in a horizontal first direction and side beams jointed to one side and another side of the plurality of plate battery cells in the horizontal first direction, by using a pressing unit, the pressing unit includes a pallet, and two pressing parts positioned opposite each other on the pallet and move in opposite directions, and the method includes adsorbing the side beams to each of opposite surfaces of the two pressing parts, and arranging the plurality of battery cells between the two pressing parts on the pallet and moving the two pressing parts toward the plurality of plate battery cells and attaching the side beams to the plurality of plate battery cells and pressing the side beams toward the plurality of plate battery cells.

Further, included may be the side beam being gripped by a multi-joint robot and supplied to the pressing unit, and before adsorbing the side beam to the two pressing parts, while the side beam being gripped by the multi-joint robot, applying an adhesive to a surface of the side beam facing the plurality of plate battery cells.

Further, the side beam may include a plate part of a plate type, and a mounting part protruding from the plate part to an opposite side of the plurality of plate battery cells, and a top border of the pressing part may be provided lower than a lower border of the mounting part.

Further, the side beam may include a plate part of a plate type, and a mounting part protruding from the plate part to an opposite side of the plurality of plate battery cells, the pressing unit may include a protruding pin protruding from a surface of an upper portion to the upper portion of the pressing part, and a temporary fixing hole into which the protruding pin is inserted may be formed on a lower surface of the mounting part.

Further, the protruding pin may be configured to descend to be introduced into the pressing part.

Further, the side beam may include a plate part of a plate type, a mounting part protruding from the plate part to an opposite side of the plurality of plate battery cells, and a grip hole formed by vertically penetrating the mounting part, the side beam may be gripped by a first gripper provided at an end of the multi-joint robot and supplied to the pressing unit, the first gripper may include a body and a gripper pin protruding from the body to a lower portion, and the side beam may be gripped by the gripper by the gripper pin being inserted into the grip hole.

Further, a plurality of grip holes may be formed, and be arranged in a horizontal second direction orthogonal to the horizontal first direction, a plurality of gripper pins may be provided and arranged in the horizontal second direction, at least two gripper pins among the plurality of gripper pins may be configured to move in directions opposite to each other, and the side beam may be gripped by the gripper by the two gripper pins moving closer or further away from each other after being inserted into the grip hole.

Further, a horizontal cross section of the grip hole and the gripper pin may be a rectangular shape with a rounded vertex.

Further, in arranging the side beam to each of surfaces facing each other of the two pressing parts, the side beam may be air-adsorbed to each of the surfaces facing each other of the two pressing parts.

### Effects of the Invention

According to the disclosed aspects, with a battery cell stack assembly and a method for manufacturing the same, internal space efficiency of the pack housing and the energy density of the battery pack can be improved, and further the process efficiency of battery pack manufacturing can be improved.

### Brief Description of Drawings

FIG. 1 is a schematic exploded perspective view illustrating the internal structure of a battery pack according to an aspect of the present disclosure.
FIG. 2 is a front elevation view of a battery cell stack assembly according to an aspect of the present disclosure.
FIG. 3 is a perspective view illustrating a portion of a battery cell stack assembly according to an aspect of the present disclosure.
FIG. 4 is a top plan view illustrating a portion of a battery cell stack assembly according to an aspect of the present disclosure.
FIG. 5 is a side elevation view illustrating a portion of a battery cell stack assembly according to an aspect of the present disclosure.
FIG. 6 is a perspective view illustrating the process of attaching a side beam to a pressing unit according to an aspect of the present disclosure.
FIG. 7 is a side elevation view illustrating a side beam attached to a battery cell stack assembly according to an aspect of the present disclosure.
FIG. 8 is a side elevation view illustrating a first gripper gripping a side beam of a battery cell stack assembly according to an aspect of the present disclosure.
FIG. 9 is a perspective view illustrating a side beam of a battery cell stack assembly being gripped by a first gripper according to an aspect of the present disclosure.
FIG. 10 is a top plan view illustrating a side beam of a battery cell stack assembly being gripped by a first gripper according to an aspect of the present disclosure.
FIG. 11 is a front elevation view illustrating a battery cell stack assembly according to an aspect of the present disclosure seated in a pressing unit and a second gripper approaching it.
FIG. 12 illustrates a front elevation view of a second gripper according to an aspect of the present disclosure.
FIG. 13 illustrates a side elevation view of one side of a second gripper according to an aspect of the present disclosure.
FIG. 14 illustrates a side elevation view of another side of the second gripper according to an aspect of the present disclosure.
FIG. 15 illustrates a top plan view of a second gripper according to an aspect of the present disclosure.
FIG. 16 illustrates a bottom plan view of a portion of a second gripper according to an aspect of the present disclosure.
FIG. 17 is a front elevation view of a second gripper gripping a battery cell stack assembly according to an aspect of the present disclosure.
FIG. 18 is a side elevation view of a second gripper gripping a battery cell stack assembly according to an aspect of the present disclosure.
FIG. 19 a top plan view illustrating a portion of a battery cell stack assembly gripped by a second gripper according to an aspect of the present disclosure.
FIG. 20 is a top plan view of a pack housing of a battery pack according to an aspect of the present disclosure.
FIG. 21 is an enlarged perspective view of a portion of a battery pack according to an aspect of the present disclosure.
FIG. 22 illustrates a perspective view of a portion of a pack housing and a portion of a side beam of a battery pack according to an aspect of the present disclosure.
FIG. 23 is a flowchart of a method for manufacturing a battery pack according to various aspects of the present disclosure.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The aspects described in this specification and the configurations shown in the drawings are only the most preferred aspects of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different aspects may be described using the same reference numerals or symbols. In other words, even if a component or an element having the same reference numeral is shown in multiple drawings, the multiple drawings may not all represent one aspect.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, aspects of the present disclosure will be described in detail with reference to the attached drawings. However, the spirit of the present disclosure may not be limited to the aspects. For example, a person skilled in the art who understands the spirit of the present disclosure may suggest other aspects that are included within the scope of the spirit of the present disclosure through addition, change, or deletion of components or elements: however, such aspects are intended to be included within the scope of the present disclosure. The shapes and sizes of elements in the drawings may be exaggerated for clearer explanation.

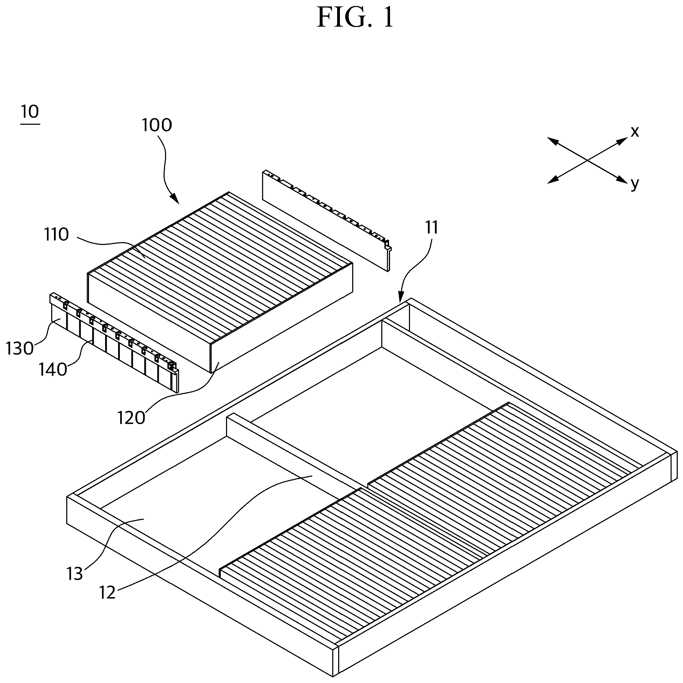

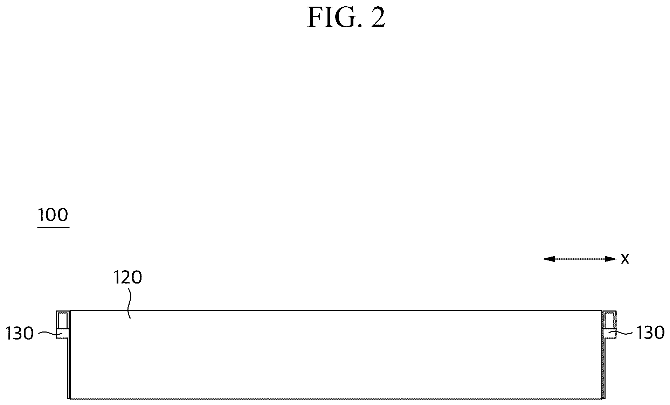

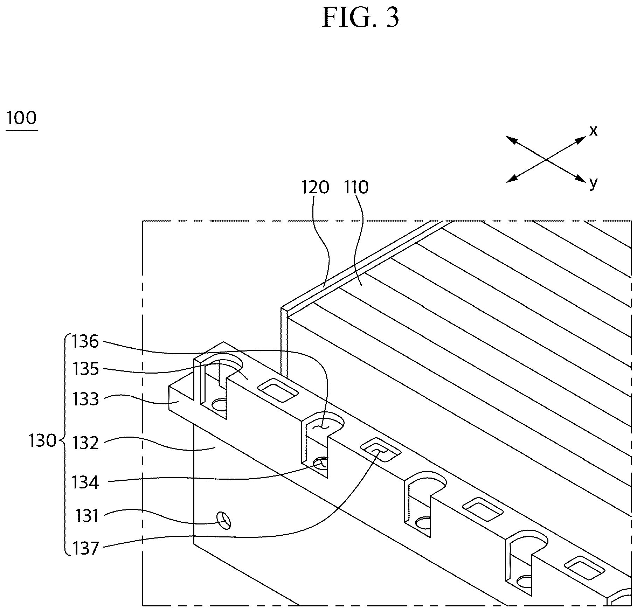

FIG. 1 is a schematic exploded perspective view illustrating the internal structure of a battery pack according to an aspect of the present disclosure. FIG. 2 is a front elevation view of a battery cell stack assembly according to an aspect of the present disclosure. FIG. 3 to FIG. 5 are, respectively, a perspective view, a top plan view, and a side elevation view illustrating a portion of a battery cell stack assembly, respectively, according to an aspect of the present disclosure.

In the present disclosure, the horizontal second direction y may be defined as a direction intersecting the horizontal first direction x. For example, the horizontal second direction y may indicate the direction that intersects perpendicularly with the horizontal first direction x.

Below, based on the drawing, horizontal first direction x may mean the x-axis direction, and horizontal second direction y may mean the y-axis direction.

A battery pack 10 according to an aspect of the present disclosure may include a pack housing 11 and a battery cell stack assembly 100, but may be implemented without one of the elements, and does not exclude additional elements.

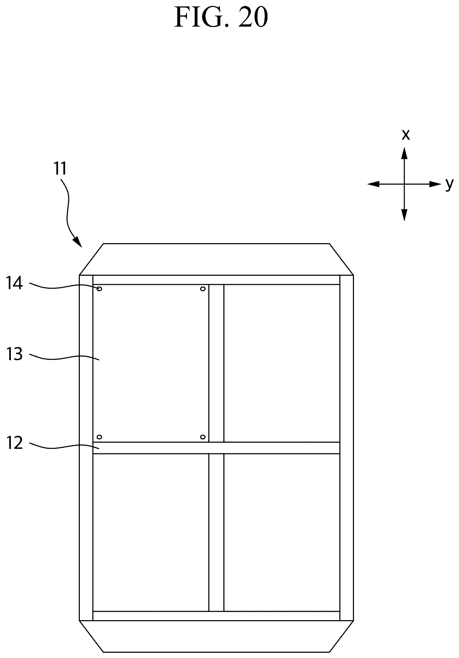

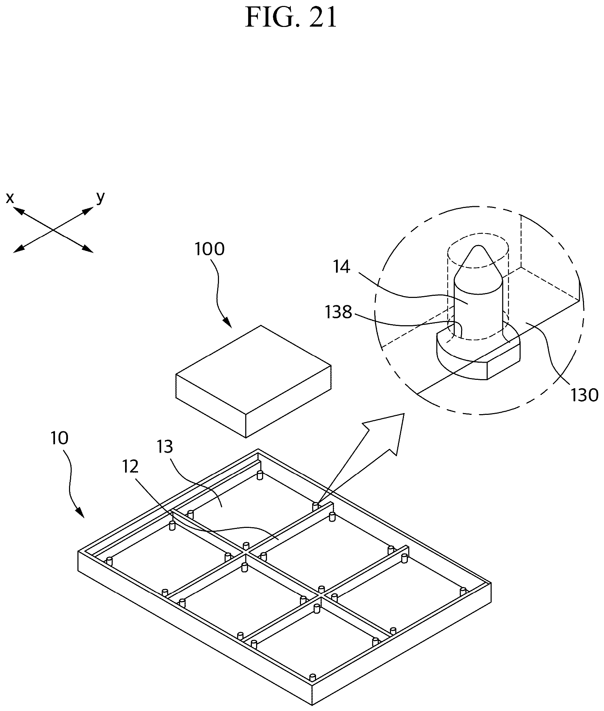

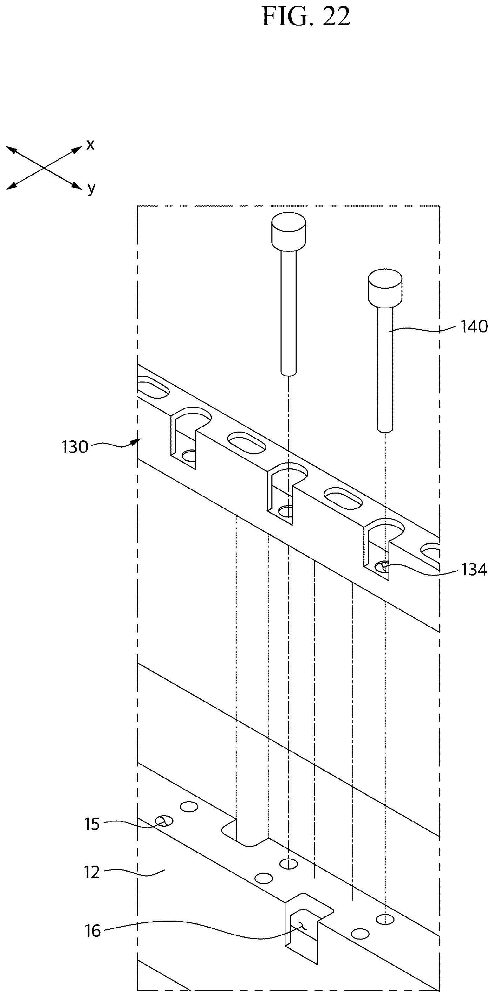

Referring to FIG. 1, the battery pack 10 may include the pack housing 11. The battery cell stack assembly 100 may be mounted in the pack housing 11. The pack housing 11 may include at least one of a jointing part 12, a bottom part 13, a guide pin (for example, a guide pin 14 of FIG. 20 and FIG. 21), a joining hole (for example, a joining hole 15 of FIG. 22) and a groove (for example, a groove 16 of FIG. 22).

The jointing part 12 may protrude into an upper portion of the bottom part 13. The jointing part 12 may extend in the horizontal second direction y. For example, the jointing part 12 may be arranged on a lower portion of the mounting part (for example, a mounting part 133 of FIG. 3) of a side beam 130 when the battery cell stack assembly 100 is arranged in the pack housing 11. The jointing part 12 may be positioned between the two battery cell stack assemblies 100 which are arranged adjacent to each other along the horizontal first direction x of the pack housing 11 at least.

The specific structure of the pack housing 11 is further described later with reference to FIG. 20 and FIG. 21.

The battery pack 10 may include the battery cell stack assembly 100. The battery cell stack assembly 100 may include a plurality of plate battery cells 110, a busbar frame assembly 120, and the side beam 130, but may be implemented excluding some of these, and does not exclude additional elements.

Referring to FIG. 1 to FIG. 5, the battery cell stack assembly 100 may include the plurality of plate battery cells 110. The plurality of plate battery cells 110 may be stacked in a horizontal first direction x.

The battery cell stack assembly 100 may include the busbar frame assembly 120. The busbar frame assembly 120 may be coupled to one side and the other side of the plurality of plate battery cells 110 in the horizontal second direction y. A lead (not illustrated) extending from the battery cell 110 in the horizontal second direction y may be connected to the busbar frame assembly 120 by, for example, passing through the busbar frame assembly 120 and then being bent.

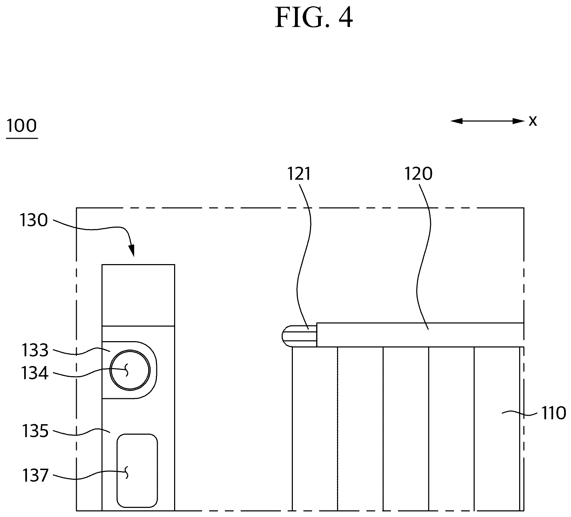

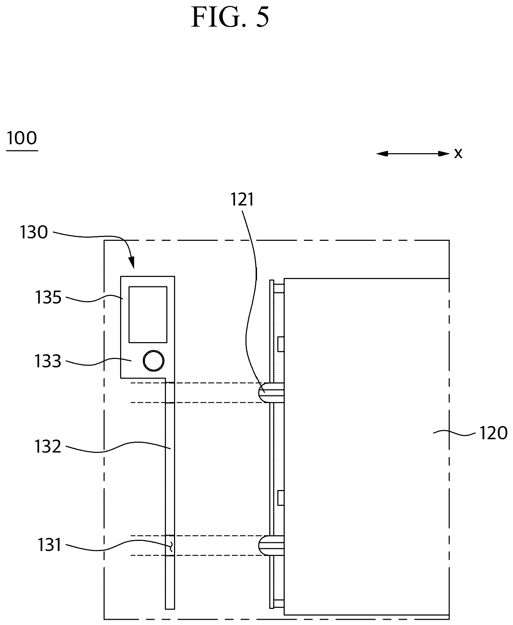

Referring back to FIG. 4 and FIG. 5, the busbar frame assembly 120 may include a pin 121. The pin 121 may protrude from one side and the other side of the busbar frame assembly 120 in the horizontal first direction. The pin 121 may be understood as protruding in the direction of the side beam 130. The pin 121 may be inserted into a hole 131 (see FIG. 5) formed in the side beam 130. The pin 121 may guide the exact joining position of the side beam 130.

The pin 121 may include a shape with a chamfered corner at the end. Alternatively, the pin 121 may include a portion whose cross section decreases as it moves away from the busbar frame assembly 120. For example, the end of the pin 121 may be formed in a tapered shape or a hemispherical shape. Through this, in the process of attaching the side beam 130 to the plurality of plate battery cells 110, even without precisely adjusting the position of the side beam 130, the pin 121 of the busbar frame assembly 120 may be easily inserted into the hole 131 of the side beam 130.

The battery cell stack assembly 100 may include the side beam 130. The side beam 130 may be coupled to one side and the other side of the plurality of plate battery cells 110 in the horizontal first direction. The side beam 130 may replace at least one of the functions of the module frame (for example, a metal frame) that encloses the battery cells and function of the beam structure of the pack housing which are of the existing technology.

Specifically, referring to FIG. 1, FIG. 3 and FIG. 22 which will be described later, the battery cell stack assembly 100 (for example, the side beam 130 of the battery cell stack assembly 100) may be fixedly connected to the pack housing 11 by a coupling member 140 while being positioned within the pack housing 11. For example, the coupling member 140 may pass through a mounting hole 134 of the side beam 130 and be fixed to the jointing part 12 formed in the bottom part 13 of the pack housing 11 (for example, the joining hole 15 formed in the jointing part 12). This structure may prevent the plurality of battery cell stack assemblies 100 from spreading out in the horizontal first direction x. Here, the side beam 130 may be secured to the jointing part 12 of the pack housing 11 in a state where it partially overlaps the jointing part 12 in the vertical direction (for example, in FIG. 1, the direction perpendicular to both the x-axis and the y-axis). With this joint structure, the space used for joining the side beam 130 and the jointing part 12 may be minimized. Further, required only is a space where the side beam 130 may be arranged between the two battery cell stack assemblies 100 arranged adjacently along the horizontal first direction x without wasting space in the x-axis direction, and thus the internal space efficiency of the housing 11 may be improved, and this may provide advantages in terms of energy density of the battery pack.

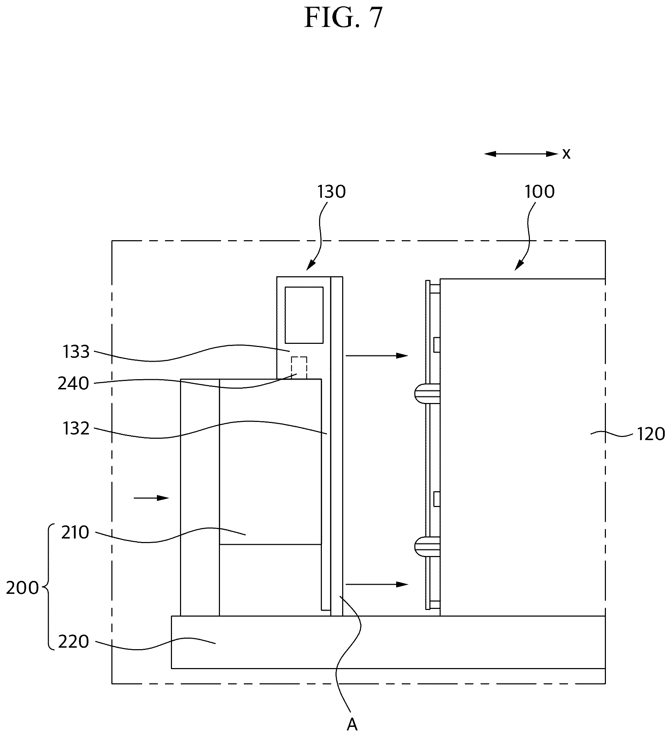

Meanwhile, referring to FIG. 7 that will be described later, the side beam 130 may be fixed to the plurality of plate battery cells 110 by adhesive A. For example, before the side beam 130 is joined to the plurality of plate battery cells 110, the adhesive A may be applied to one surface of the side beam 130 facing the plurality of plate battery cells 110. However, the present disclosure is not limited to the aspect, and the adhesive A may be applied to one surface of the plurality of plate battery cells 110 facing the side beam 130 before the side beam 130 is joined to the plurality of plate battery cells 110.

Alternatively, the side beam 130 may be joined to the plurality of plate battery cells 110 by a separate mechanical mechanism. For example, the side beam 130 may be attached to the plurality of plate battery cells 110 by having a separate coupling member (for example, a screw) pass through the side beam 130 and be fixedly joined to the busbar frame assembly 120.

Referring to FIG. 3 to FIG. 5, the hole 131 may be formed in the side beam 130 into which the pin 121 of the busbar frame assembly 120 may be inserted. The hole 131 may be formed in a plate part 132 of the side beam 130. For example, when the side beam 130 is attached to the plurality of plate battery cells 110, the pin 121 of the busbar frame assembly 120 is inserted into the hole 131 of the side beam 130, thereby guiding the exact join position of the side beam 130. FIG. 5 illustrates a structure where, on one side of the side beam 130, two holes 131 into which the pin 121 of the busbar frame assembly 120 may be inserted are formed vertically spaced apart from each other, but various aspects of the present disclosure are not limited to these numbers and structures. It is apparent that the hole 131 may be formed only on one side of the side beam 130 and three or more holes 131 may be formed.

Meanwhile, the side beam 130 may include the plate part 132. The plate part 132 may be provided in plate form. The plate part 132 may have an area sufficient to cover the electrode receiving portion (the portion where the electrode assembly is received) of each plate battery cell 110. The plate part 132 may be provided in a size and shape that may cover both the plate battery cell 110 and the busbar frame assembly 120 in the x-axis direction. The plate part 132 may be a part that directly presses the plurality of plate battery cells 110 inward. Further, the plate part 132 may be a part that is sucked by an air suctioning part 230 formed in a pressing unit 200 described later.

The side beam 130 may include the mounting part 133. The mounting part 133 may protrude (in other words, outwardly) from the plurality of plate battery cells 110 of the plate part 132.

Referring to FIG. 3, the mounting part 133 may be extended horizontally. Specifically, the mounting part 133 may be extended in the horizontal second direction y. Through this, the mounting part 133 may act as a girder for the plate part 132, and thus the structural rigidity of the side beam 130 may be improved.

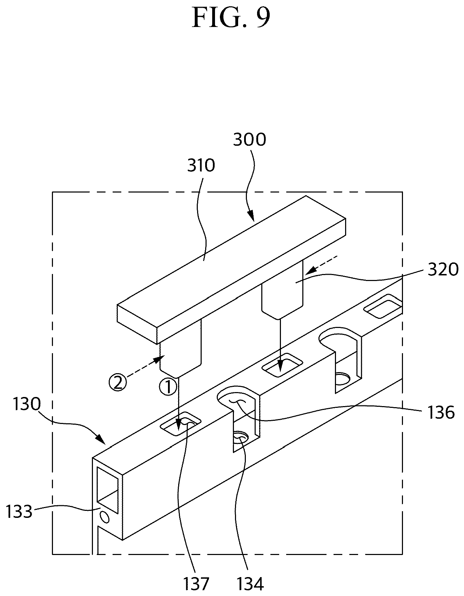

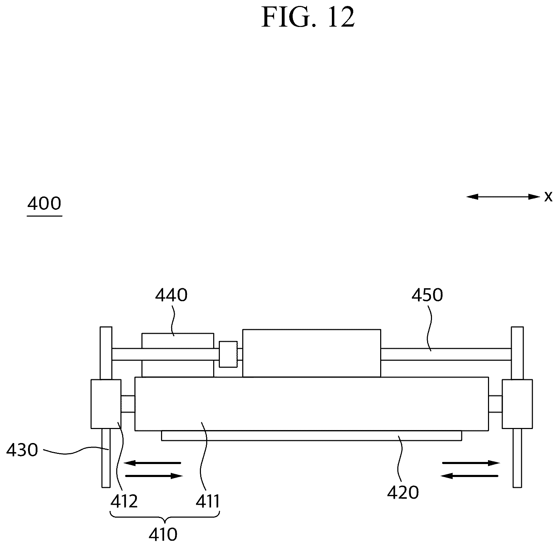

Further, in addition, as described later, even when the mounting hole 134 and/or a grip hole 137 are formed in the mounting part 133, the stress due to each member (for example, the coupling member 140, a gripper pin 320 (see FIG. 9), a lift pin 430 (see FIG. 12)) that may be inserted into the holes 134 and 137 may be distributed, and thus breakage and/or deformation of the side beam 130 due to stress concentration phenomenon may be prevented.

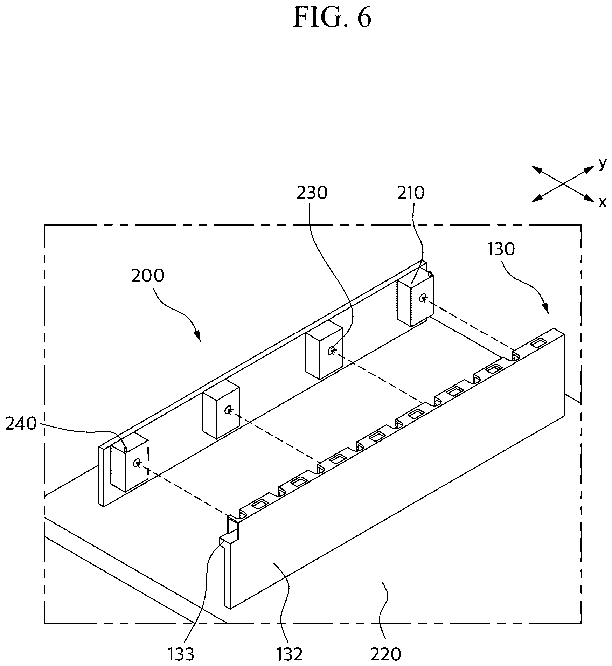

The mounting part 133 may be formed on the upper portion of the plate part 132. For example, the mounting part 133 may be formed at a position higher than at least the mid-height of the plate part 132. Specifically, referring to FIG. 6 and FIG. 7 together, in order for a pressing part 210 (see FIG. 6 and FIG. 7) of the pressing unit 200 (see FIG. 6 and FIG. 7) to effectively pressurize the side beam 130, it may be desirable to pressurize the central portion relative to the vertical direction of the plate part 132. Accordingly, the top border of the pressing part 210 may need to be positioned higher than the vertical center portion of the plate part 132. Therefore, in order for the pressing part 210 to effectively press the plate part 132 without interference with the mounting part 133, it may be desirable for the lower border of the mounting part 133 to be positioned higher than the top border of the pressing part 210.

The mounting hole 134 may be formed in the mounting part 133. The mounting hole 134 may be formed through a direction perpendicular to the direction in which the mounting part 133 protrudes from the plate part 132 (in other words, the vertical direction). Formed may be a plurality of mounting holes 134. The plurality of mounting holes 134 may be arranged to be mutually spaced apart along the horizontal second direction y. When the battery cell stack assembly 100 is joined to the pack housing 11, the coupling member 140 may be joined to the joining hole 15 (illustrated in FIG. 22) formed in the jointing part 12 of the pack housing 11 by passing through the mounting hole 134.

Meanwhile, the side beam 130 may include a cover part 135. The cover part 135 may be mounted on top of the mounting part 133. Specifically, the cover part 135 may be a structure that includes at least a top surface extending from the plate part 132 to the opposite side (in other words, outside) of the plurality of plate battery cells 110, and a side surface that extends downward from the edge of the top surface and connects to the upper surface of the mounting part 133. The cover part 135 may improve the structural rigidity of the side beam 130 including the mounting part 133 and the plate part 132 by forming a folded plate structure that reinforces the top surface of the mounting part 133.

An opening part 136 may be formed in the cover part 135 at a position corresponding to the mounting hole 134. For example, the opening part 136 may be formed at a position that vertically overlaps the mounting hole 134. Through the opening part 136, the coupling member 140, which secures the side beam 130 to the jointing part of the pack housing 11, may be inserted into the mounting part 133 without interfering with the cover part 135.

The opening part 136 may have a structure in which not only the top surface of the cover part 135 but also the side surface is opened. Through this structure, in the process of joining the coupling member 140 to the mounting hole 134 and the jointing part 12 after the battery cell stack assembly 100 is installed inside the pack housing 11, a joining tool (not illustrated) for joining the coupling member 140 is readily accessible to the coupling member 140.

Again, referring to FIG. 3 and FIG. 4, the side beam 130 may include the grip hole 137. The grip hole 137 may be formed vertically in the side beam 130. Specifically, the grip hole 137 may be formed through the top surface of the cover part 135. Further, the grip hole 137 may be formed by passing vertically through the mounting part 133. The grip hole 137 formed by penetrating the top surface of the cover part 135 and the grip hole 137 formed by penetrating the mounting part 133 may be formed at positions that overlap each other in a vertical direction. Hereinafter, the grip hole 137 of the cover part 135 and the grip hole 137 of the mounting part 133, which are formed by overlapping each other in a vertical direction, may be understood as one grip hole 137. However, the present disclosure is not limited to these aspects. In some other aspects, the grip hole 137 may be formed by penetrating only the top surface of the cover part 135 and may not be formed by penetrating the mounting part 133.

Meanwhile, formed may be a plurality of grip holes 137. The plurality of grip holes 137 may be arranged at a predetermined interval in the horizontal second direction y. In an aspect, the gripper pin 320 (illustrated in FIG. 9) of a first gripper 300 (illustrated in FIG. 9) may be inserted into the grip hole 137. Further, the lift pin 430 (illustrated in FIG. 12) of a second gripper 400 (illustrated in FIG. 12) may be inserted into the grip hole 137.

The grip hole 137 may be a square shape with a rounded vertex (or corner) portion. For example, the grip hole 137 may have a filleted corner shape. The grip hole 137 corresponds to the shape of the gripper pin 320 (illustrated in FIG. 9) of the first gripper 300 (illustrated in FIG. 9) having a rounded cross section and/or the lift pin 430 (illustrated in FIG. 12) of the second gripper 400 (illustrated in FIG. 12) having a rounded cross section, but may be formed to have a size that is a predetermined ratio larger than the size of each cross section of the gripper pin 320 (illustrated in FIG. 9) and/or the lift pin 430 (illustrated in FIG. 12).

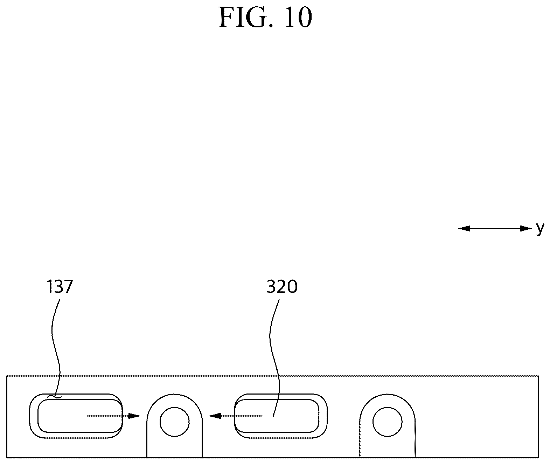

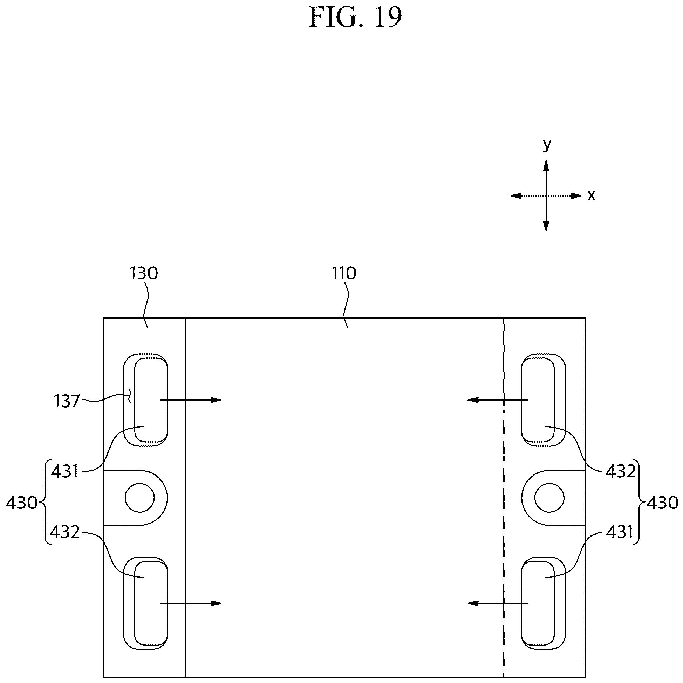

As the grip hole 137 is formed as a square shape with a rounded vertex (or corner) part, the side beam 130 may be stably surface-pressed against the surface by the gripper pin 320 (illustrated in FIG. 9) and/or the lift pin 430 (illustrated in FIG. 12). In this regard, this will be described in detail later with reference to FIG. 10 and FIG. 19.

Meanwhile, a side of the grip hole 137 toward the plurality of planar battery cells 110 may be conformed, in the vertical direction, to a surface of the plate part 132 opposite to the plurality of battery cells 110. In other words, at least a portion of the inner side surface forming the grip hole 137 may be positioned on the same plane as one side of the plate part 132. Through this, in the process that a specific element inserted into the grip hole 137, for example, the lift pin 430 (illustrated in FIG. 12) of the second gripper 400 (illustrated in FIG. 12), presses the side beam 130 toward the plurality of plate battery cells 110, the contact is made between the pressurizing element (for example, the lift pin 430 (illustrated in FIG. 12)) and the side beam 130, so that pressurization may be performed efficiently.

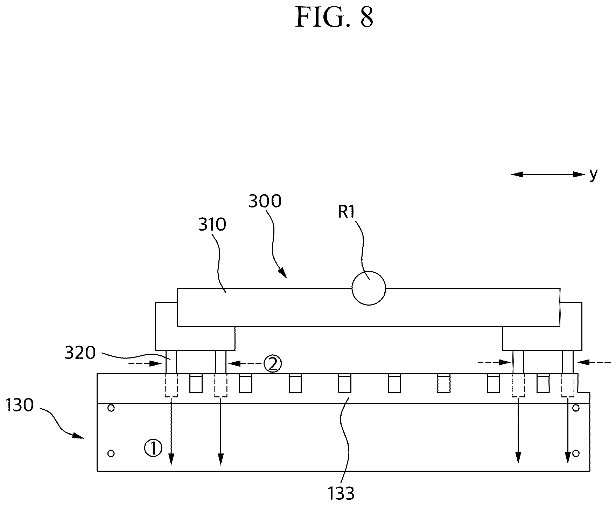

FIG. 6 is a perspective view illustrating the process of attaching a side beam to a pressing unit according to an aspect of the present disclosure. FIG. 7 is a side elevation view illustrating a side beam attached to a battery cell stack assembly according to an aspect of the present disclosure. FIG. 8 to FIG. 10 illustrates that a first gripper grips a side beam of a battery cell stack assembly according to an aspect of the present disclosure.

Referring to FIG. 6 and FIG. 7, the side beam 130 of the battery cell stack assembly 100 according to an aspect of the present disclosure may be joined to the plurality of plate battery cells 110 by the pressing unit 200. Further, the pressing unit 200 may press the battery cell stack assembly 100 until the horizontal first direction x length of the battery cell stack assembly 100 reaches a required value, and maintain the pressed state.

The pressing unit 200 may contain a pallet 220. The plurality of plate battery cells 110 may be mounted on the pallet 220.

The pressing unit 200 may include the pressing part 210. Referring to FIG. 6, the pressing part 210 may have a structure in which multiple block-shaped units are arranged in the horizontal second direction y. The pressing part 210 may be attached to a plate-shaped structure extending in a vertical direction and be formed to protrude in a direction toward the plurality of plate battery cells 110. However, it may not be limited thereto, and a single block-shaped unit may be provided as a single structure extending in the horizontal second direction y.

Meanwhile, prepared may be two pressing parts 210 (for example, plate structure and block-shaped unit(s) formed by protrusion therefrom). The two pressing parts 210 may be arranged on one side and the other side of the plurality of plate battery cells 110 in the horizontal first direction x arranged on the pallet 220, respectively. The two pressing parts 210 are arranged facing each other and may move in opposite directions. For example, two pressing parts 210 are arranged to face each other in the horizontal first direction x and may move toward or away from each other.

In the manufacturing process of the battery cell stack assembly 100, when the side beam 130 is supplied to the pressing unit 200, the side beam 130 may be arranged in order for a lower portion area of the mounting part 133 of the plate part 132 to be in close contact with a surface of the pressing part 210 facing the plurality of plate battery cells 110, and in order for a lower surface of the mounting part 133 to be seated on the top surface of the pressing part 210.

The side beam 130 may be attached to the plurality of plate battery cells 110 by the action of two pressing parts 210. Specifically, while the two pressing parts 210 being spaced apart from each other, by placing the side beams 130 on each of the facing surfaces of the two pressing parts 210, and moving the two pressing parts 210 toward each other, that is, toward the plurality of plate battery cells 110, the side beam 130 may be attached to one side and the other side of the plurality of plate battery cells 110 in the horizontal first direction. The attachment of the side beam 130 to the plurality of plate battery cells 110 may be accomplished by adhesive A.

The two pressing parts 210 may press the side beam 130 toward the plurality of plate battery cells 110 Specifically, the battery cell stack assembly 100 may be pressurized until the horizontal first direction x length of the battery cell stack assembly 100 is reached to the required level by the two operations of the pressing parts 210. Here, the required level of horizontal first direction x length of the battery cell stack assembly 100 may indicate the length in which the battery cell stack assembly 100 may be arranged in the pack housing 11 (illustrated in FIG. 1) and the side beam 130 may be joined to the jointing part 12 (illustrated in FIG. 1) of the pack housing 11 (illustrated in FIG. 1). For example, referring to FIG. 4, the horizontal first direction x length before the pressure of the plurality of plate battery cells 110 may be greater than the horizontal first direction x length of the busbar frame assembly 120 excluding the pin 121, and the plurality of plate battery cells 110 may be pressurized until length of the plurality of plate battery cells 110 corresponds to length excluding the pin 121 of the busbar frame assembly 120, by the pressure of the pressing part 210.

Referring to FIG. 7, the pressing part 210 may be provided to overlap the vertical middle region of the side beam 130 in the horizontal direction. Through this structure, the pressing part 210 may pressurize the vertical middle region of the side beam 130, and thus pressurization of the side beam 130 by the pressing part 210 may be effectively achieved.

The top border of the pressing part 210 may be provided lower than the bottom border of the mounting part 133 of the side beam 130. Through this, the pressing part 210 may avoid interfering with the mounting part 133 from the bottom of the mounting part 133, and being in the surface contact with the plate part 132 formed at the lower portion of the mounting part 133 of the side beam 130, may press the side beam 130 toward the plurality of plate battery cells 110.

Referring to FIG. 6, the pressing unit 200 may include the air suctioning part 230. The air suctioning part 230 may be equipped with the pressing part 210. The air suctioning part 230 may be provided on the surface facing the side beam 130 of the pressing part 210. When the side beam 130 is supplied to the pressing unit 200, the side beam 130 may be maintained in a state of being sucked by the pressing part 210 by the action of the air suctioning part 230.

Referring to FIG. 6 and FIG. 7, the pressing unit 200 may include a protruding pin 240. The protruding pin 240 may protrude upward from the upper surface of the pressing part 210. When the side beam 130 is supplied to the pressing unit 200, the protruding pin 240 may be positioned to overlap vertically with the mounting part 133 of the side beam 130. The protruding pin 240 may be inserted into a temporary fixing hole (not illustrated), the mounting hole 134, or the grip hole 137 formed in the lower surface of the mounting part 133 of the side beam 130. Through the protruding pin 240, the position where the side beam 130 to be provided may be guided.

The protruding pin 240 may move up and down. Specifically, the protruding pin 240 is operable to descend to be introduced into the pressing part 210. Until the side beam 130 is provided to the pressing unit 200, the pressing part 210 pressurizes the battery cell stack assembly 100 and the second gripper 400 (illustrated in FIG. 12) grips the battery cell stack assembly 100, the protruding pin 240 may protrude from the top of the pressing part 210, and after then, before the pressurization of the pressing part 210 is released, the protruding pin 240 may descend in order not to be protruding from the pressing part 210. With regard to the operation of the protruding pin 240, the pressing part 210 moves away from the battery cell stack assembly 100 when pressurization is released, and at this time, as the protruding pin 240 descend and is introduced into the pressing part 210, the movement of the pressing part 210 may not interfere with the side beam 130.

Referring to FIG. 8 and FIG. 9, the side beam 130 may be gripped by a multi-joint robot R1 and supplied to the pressing unit 200. The side beam 130 may be rotated at various angles by the multi-joint robot R1.

The multi-joint robot R1 may include the first gripper 300. The first gripper 300 may be installed at the end of the multi-joint robot R1. The side beam 130 may be gripped by the first gripper 300 and provided to the pressing unit 200 side.

The first gripper 300 may contain a base 310. The base 310 may be the part that is connected to the arm of the multi-joint robot R1. In an aspect, the inside of the base 310 may accommodate a driving part (not illustrated) that operates the gripper pin 320. Unlike this, the gripper pin 320 may also be arranged in other locations, such as the arm of the multi-joint robot R1. Further, it is apparent that position may also be adjusted manually by an operator without control by a separate driving part.

The first gripper 300 may include the gripper pin 320. The gripper pin 320 may protrude downward from the base 310. The side beam 130 may be gripped by the first gripper 300 as the gripper pin 320 is inserted into the mounting hole 134 formed in the side beam 130.

Prepared may be a plurality of gripper pins 320. The plurality of gripper pins 320 may be arranged spaced apart from each other by a predetermined interval in the horizontal second direction y. Each of the gripper pins 320 may be positioned and fixed to the first gripper 300 while moving along the horizontal second direction y.

For example, referring to FIG. 8 and FIG. 9, at least two gripper pins 320 among the plurality of gripper pins 320 may move toward or away from each other. The side beam 130 may be gripped by the first gripper 300 by the two gripper pins 320 moving closer or further away from each other after they are inserted into the mounting hole 134. For example, when two adjacent gripper pins 320 among the plurality of gripper pins 320 are inserted into the mounting hole 134 and come close to each other, the side beam 130 is gripped by being tightened by the two gripper pins 320. To effectively implement this gripping method, the gripper pins 320 are provided in even numbers in order for two adjacent gripper pins 320 to form a pair, and the paired gripper pins 320 may be moved closer or further away from each other.

Referring to FIG. 9, the gripper pin 320 may have a column shape extending vertically. The horizontal cross section of the gripper pin 320 may be a rectangular shape with rounded vertices (or corners). In other words, the horizontal cross section of the gripper pin 320 may have a filleted shape at the vertex (or corner). The horizontal cross section shape of the gripper pin 320 may correspond to the shape of the grip hole 137 of the side beam 130. The horizontal cross section of the gripper pin 320 may be made smaller than the size of the grip hole 137 of the side beam 130. As the horizontal cross section of the gripper pin 320 and the grip hole 137 are provided in a square shape, when the gripper pin 320 is inserted into the grip hole 137 and moves in the horizontal second direction y, the gripper pin 320 and the grip hole 137 may make linear contact with each other based on FIG. 9, and thus the first gripper 300 may stably grip the side beam 130. Further, as the horizontal cross section of the gripper pin 320 and the shape of the grip hole 137 have a rounded vertex (or corner), even if the gripper pin 320 is not perfectly inserted into the center of the grip hole 137, when the gripper pin 320 moves in the horizontal second direction y, the gripper pin 320 may slide along the rounded portion of the grip hole 137 and be aligned with the horizontal first direction x center area of the grip hole 137, and thus the stable gripping of the gripper pin 320 may be realized. Further, as the horizontal cross section of the gripper pin 320 and the shape of the grip hole 137 have a rounded vertex (or corner), even if the gripper pin 320 is inserted into the grip hole 137 at a slight angle, the problem of the side beam 130 being deformed or broken due to stress concentration at the corner of the gripper pin 320 is prevented. However, a shape of the cross section of the gripper pin 320 is not limited thereto and may be circular or oval or may be provided in a rectangular shape of which a vertex (or corner) portion is not rounded.

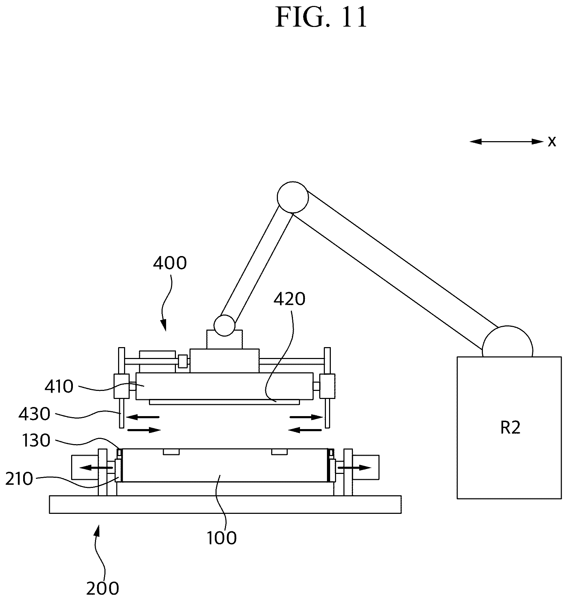

FIG. 11 is a front elevation view illustrating that a battery cell stack assembly according to an aspect of the present disclosure is pressurized by the pressing unit 200 and a second gripper approaching this.

Referring to FIG. 11, briefly described is the process of the second gripper 400 approaching the battery cell stack assembly 100 pressurized by the pressing unit 200 and gripping the battery cell stack assembly 100.

The second gripper 400 may be installed at the end of a multi-joint robot R2. The battery cell stack assembly 100 held by the second gripper 400 may be transported along various paths and angles by the multi-joint robot R2. Here, the multi-joint robot R2 may be the same as the multi-joint robot R1 to which the first gripper 300 (illustrated in FIG. 9) is connected, or may be available separately.

The battery cell stack assembly 100 may be transported into the pack housing 11 (illustrated in FIG. 1) after being gripped by the second gripper 400 while being pressurized by the pressing unit 200. Hereinafter, the second gripper 400 may refer to a battery cell stack assembly transport gripper that grips the battery cell stack assembly 100 and transports it to the pack housing 11.

Specifically, while the battery cell stack assembly 100 being pressurized by the pressing unit 200, the lift pin 430 protruding downward from a base 410 of the second gripper 400 may be inserted into the grip hole 137 of each side beam 130 provided on one side and the other side of the horizontal first direction x of the battery cell stack assembly 100. While being inserted in the grip hole 137, the lift pin 430 may move in a direction from the side beam 130 toward the plurality of plate battery cells 110 to press the side beam 130 inward.

While the lift pin 430 being inserted into the grip hole 137 of the side beam 130, the battery cell stack assembly 100 may be lifted by the top surface of the battery cell stack assembly 100 being adsorbed to an adsorbing part 420 provided in the second gripper 400. When the battery cell stack assembly 100 is lifted, the two pressing parts 210 of the pressing unit 200 move away from each other to relieve pressure, and at the time, since the lift pin 430 presses the side beam 130 inward, the pressurized state of the battery cell stack assembly 100 may be maintained continuously.

The battery cell stack assembly 100 lifted by the second gripper 400 may be transported to the pack housing 11 (illustrated in FIG. 1) and mounted in the pack housing 11 (illustrated in FIG. 1) in the pressurized state.

Below, the specific structure of the second gripper 400 is described with reference to FIG. 12 to FIG. 19.

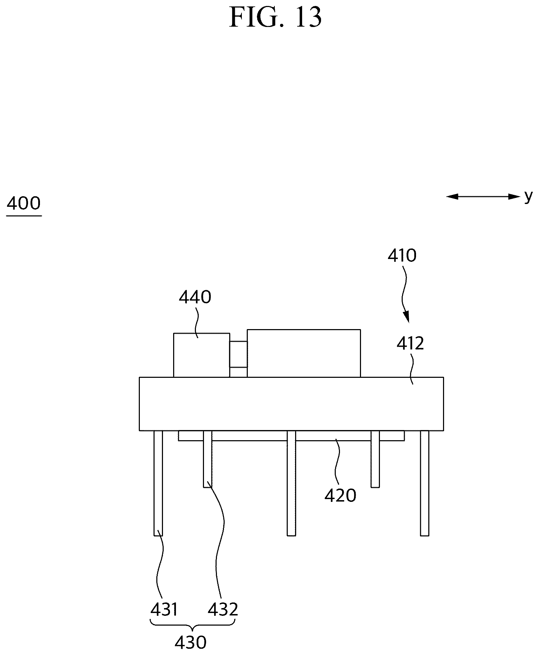

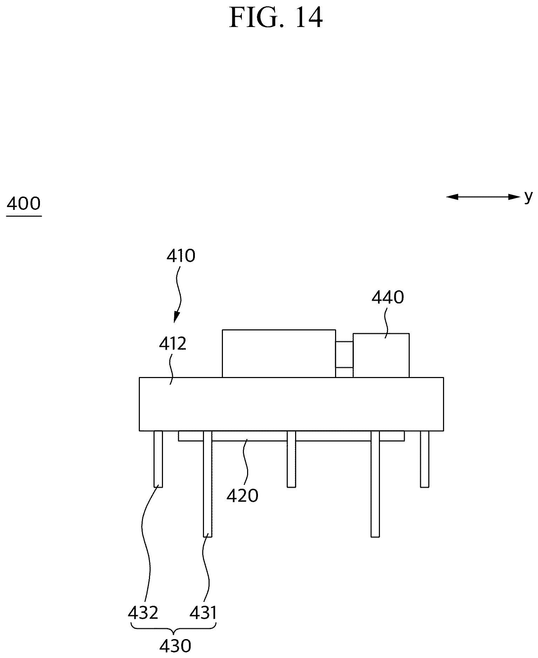

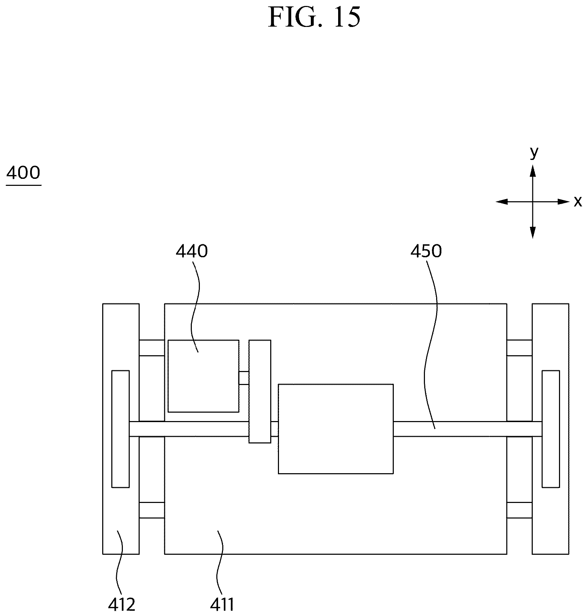

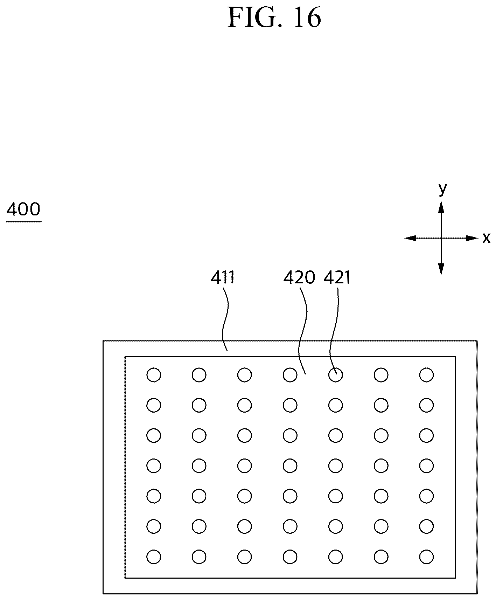

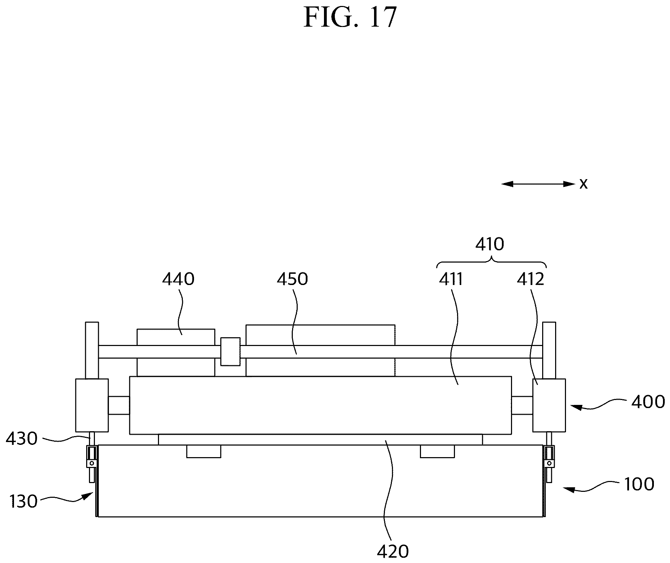

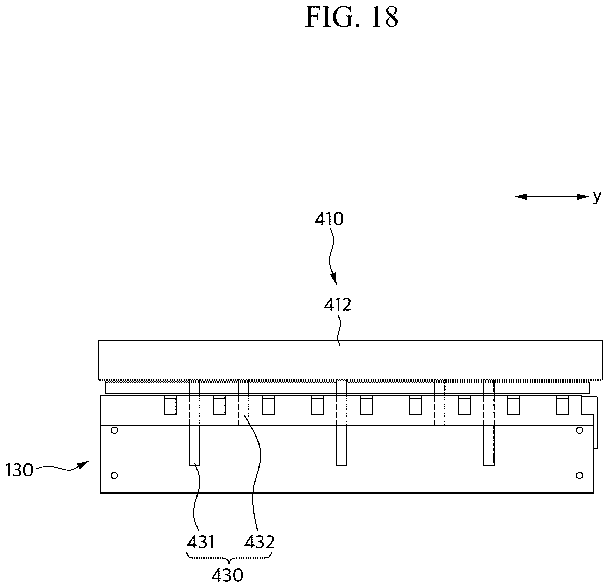

FIG. 12 illustrates a front elevation view of a second gripper according to an aspect of the present disclosure. FIG. 13 illustrates a side elevation view of one side of a second gripper according to an aspect of the present disclosure. FIG. 14 illustrates a side elevation view of another side of the second gripper according to an aspect of the present disclosure. FIG. 15 illustrates a top plan view of a second gripper according to an aspect of the present disclosure. FIG. 16 illustrates a bottom plan view of a portion of a second gripper viewed from the bottom according to an aspect of the present disclosure. FIG. 17 is a front elevation view of a second gripper gripping a battery cell stack assembly according to an aspect of the present disclosure. FIG. 18 is a side elevation view of a second gripper gripping a battery cell stack assembly according to an aspect of the present disclosure. FIG. 19 illustrates a top plan view of a portion of a battery cell stack assembly gripped by a second gripper according to an aspect of the present disclosure.

Referring to FIG. 12 to FIG. 19, the second gripper 400 may contain the base 410. While the second gripper 400 gripping the battery cell stack assembly 100, the base 410 may be arranged on top of the battery cell stack assembly 100.

The base 410 may contain a body part 411. The body part 411 may be provided in the central area of the base 410. The body part 411 may be a part joined to a multi-joint robot R. The body part 411 may be a part whose relative position with respect to the battery cell stack assembly 100 is fixed in the process of joining the second gripper 400 to the battery cell stack assembly 100.

The base 410 may include an operation part 412. The operation part 412 may be positioned on one side and the other side of the body part 411 in the horizontal first direction x. Based on FIG. 12, the operation part 412 may be provided on each of the left side and the right side of the body part 411. The operation part 412 may move away from or closer to the body part 411.

The second gripper 400 may include the adsorbing part 420. The adsorbing part 420 may be arranged at the lower portion of the base 410 in the central area of the base 410. For example, the adsorbing part 420 may be arranged in the lower portion of the body part 411. The adsorbing part 420 may be adhered to the top surface of the battery cell stack assembly 100.

The adsorbing part 420 may adsorb the battery cell stack assembly 100. By air-adsorbing the top surface of the battery cell stack assembly 100, the adsorbing part 420 may prevent the battery cells 110 from sagging in the lower portion in the direction of gravity during transport of the battery cell stack assembly 100. Accordingly, even though the battery cell stack assembly 100 has no conventional module frame covering a top surface and a bottom surface of the battery cells 110, stable transport is possible.

Referring to FIG. 16, the adsorbing part 420 may be provided in pad form. The top surface of the battery cell stack assembly 100, to which the adsorbing part 420 is adhered, may be provided with a shape roughly like a plane. In order for the adsorbing part 420 to effectively provide adsorption force to the battery cell stack assembly 100, it may be desirable that the adsorbing part 420 is provided as a pad type corresponding to the top surface of the battery cell stack assembly 100. However, the adsorbing part 420 is not limited thereto and may be provided in various forms as long as it may provide sufficient adsorption force to the battery cell stack assembly 100.

The adsorbing part 420 may be provided with a pad made of elastic material. For example, the adsorbing part 420 is a sponge material, and may be provided as a wide-area foam-type material that may implement sealing by changing its shape according to the shape of the adsorption surface of the adsorption target. Specifically, the top surface of the battery cell stack assembly 100 may be provided as a surface having approximately irregular unevenness. Therefore, in order for the adsorbing part 420 to effectively adhere to the irregular top surface of the battery cell stack assembly 100, it may be desirable for the adsorbing part 420 to be provided as a deformable pad type.

A plurality of adsorbing holes 421 may be formed in the adsorbing part 420. For example, as illustrated in FIG. 16, the adsorbing part 420 may have the plurality of adsorbing holes 421 formed in a lattice arrangement. However, the multiple adsorbing holes 421 are not limited thereto, and may have various arrangements. As the number of adsorbing holes 421 is increased, the adsorbing part 420 may more effectively adsorb the irregular top surface of the battery cell stack assembly 100.

Referring to FIG. 12 to FIG. 14, the second gripper 400 may include the lift pin 430. The lift pin 430 may protrude from the lower portion of the base 410. Specifically, the lift pin 430 may protrude into the lower portion of the operation part 412.

Referring to FIG. 17 to FIG. 19, the lift pin 430 may be inserted into the grip hole 137 formed in the side beam 130. The lift pin 430 may press the side beam 130 inwardly in the horizontal first direction x while inserted into the grip hole 137. Specifically, when the operation part 412 moves toward the battery cell stack assembly 100 by the operation of a driving part 440 while the lift pin 430 is inserted into the grip hole 137, accordingly, the lift pin 430 may also move toward the battery cell stack assembly 100 to press the side beam 130 toward the battery cell stack assembly 100. Through this, the battery cell stack assembly 100, pressurized by the pressing unit 200, is transported by the gripper 300 and the pressurized state may be maintained until it is seated in the pack housing 11.

Provided may be a plurality of lift pins 430 for each side beam 130. In other words, the plurality of lift pins 430 may be provided for each operating part 312. The plurality of lift pins 430 provided for each side beam 130 may be arranged in the horizontal second direction y. As there are multiple lift pins 330 for each side beam 130, the pressurization of the side beam 130 by the lift pins 330 may be effectively achieved.

The lift pins 430 arranged in the horizontal second direction y for each side beam 130 may have corresponding numbers. Further, for each side beam 130, the lift pins 430 may be arranged in positions facing each other in the horizontal second direction y. This allows the second gripper 400 to evenly grip the battery cell stack assembly 100, and thus the transport stability of the battery cell stack assembly 100 may be improved.

Referring to FIG. 13, FIG. 14 and FIG. 18, the lift pin 430 may include a first pin 431 having a first length and a second pin 432 having a second length. For example, the first length may be longer than the second length.

The first pin 431 may be provided with a length such that the lower end of the first pin 431 protrudes below the lower end of the mounting part 133 of the side beam 130 when the second gripper 400 gripped the battery cell stack assembly 100. For example, the first pin 431 may be provided with a length that allows it to be positioned below half the height of the side beam 130 when the second gripper 400 gripped the battery cell stack assembly 100.

The first pin 431 may transmit sufficient pressing force to the side beam 130. Specifically, when the lift pin 430 is inserted into the grip hole 137 of the side beam 130 to press the side beam 130 toward the plurality of plate battery cells 110, by the first pin 431 being positioned below the bottom of the mounting part 133 of the side beam 130, preferably below half the height of the side beam 130, the lower portion area of the side beam 130 may be prevented from spreading outward by the elastic restoring force of the plurality of plate battery cells 110.

For example, the second pin 432 may be provided in length in which the bottom of the second pin 432 aligns with the bottom of the mounting part 133 of the side beam 130 or is located higher than the bottom of the mounting part 133 of the side beam 130 when the second gripper 400 gripped the battery cell stack assembly 100.

Referring to FIG. 13 and FIG. 14, the lift pins 430 arranged in the horizontal second direction y for each side beam 130 may be formed by a combination of the first pin 431 and the second pin 432. For example, in the lift pins 430 arranged in the horizontal second direction y for each side beam 130, the first pin 431 and the second pin 432 may be arranged alternately in the horizontal second direction y direction. Specifically, in the process of mounting the battery cell stack assembly 100 into the pack housing 11, in order to prevent the first pin 431 protruding below the lower end of the mounting part 133 and the jointing part 12 of the pack housing 11 from interfering with each other, the groove 16 may be formed in the jointing part 12. Here, when all the pins provided in the lift pin 430 of the first row are all first pin 431, since the jointing part 12 must have a corresponding number of grooves 16, the structural rigidity of the jointing part 12 may be weakened. Therefore, it may be desirable that the second gripper 400 is provided with a number of first pins 431 sufficient to provide a certain level of pressing force, and the remaining lift pins 430 is provided as the second pins 432. However, the lift pin 430 is not limited thereto, and when the jointing part 12 of the pack housing 11 has sufficient structural rigidity, all lift pins 430 may also be the first pins 431. Further, even if the lift pin 430 is composed of only the second pin 432, the second gripper 400 may provide sufficient pressing force to the side beam 130, and if the lower portion area of the side beam 130 is not spread outwardly by the restoring force of the plurality of plate battery cells 110, the lift pins 430 may all be composed of the second pins 432.

Referring to FIG. 13 and FIG. 14, the lift pins 430 arranged in horizontal second direction y with respect to the side beam 130 joined to one side of the plurality of plate battery cells 110 in the horizontal first direction x and the lift pins 430 arranged in horizontal second direction y with respect to the side beam 130 joined to the horizontal first direction x of the plurality of plate battery cells 110 may have different combinations of the first pin 431 and the second pin 432.

When referring to FIG. 13 illustrating the lift pin 430 arranged in a horizontal second direction y relative to the side beam 130 joined to one side of the plurality of plate battery cells 110 in a horizontal first direction x, for example, the lift pins 430 may have an arrangement of the first pin 431 - the second pin 432 - the first pin 431 - the second pin 432 - the first pin 431. Meanwhile, referring to FIG. 14 illustrating the lift pin 430 arranged in horizontal second direction y with respect to the side beam 130 joined to the other side of horizontal first direction x of the plurality of plate battery cells 110, the lift pins 430 may have an arrangement of the second pin 432 - the first pin 431 - the second pin 432 - the first pin 431 - the second pin 432.

In other words, it may be understood that one of the lift pins 430 facing each other in the horizontal first direction x is the first pin 431 and the other is the second pin 432. When all lift pins 430 facing each other in the horizontal first direction x are configured as the first pins 431, in order to prevent interference of the first pin 431 in the jointing part 12 (illustrated in FIG. 22) arranged between the two battery cell stack assemblies 100, the grooves 16 (illustrated in FIG. 22) must be formed at positions adjacent to each other in the horizontal first direction x, and as a result, the portions where the grooves 16 (illustrated in FIG. 22) are formed in the jointing part 12 (illustrated in FIG. 22) may become thinner, which may weaken the structural rigidity of the jointing part 12 (illustrated in FIG. 22). Therefore, in the jointing 12 (illustrated in FIG. 22), in order for the grooves 16 (illustrated in FIG. 22) to be arranged alternately to correspond to the battery cell stack assembly 100 adjacent to each other, it may be desirable for the lift pins 430 to be arranged so that if one of the lift pins facing each other in the horizontal first direction x is the first pin 431, the other one is the second pin 432.

Referring to FIG. 19, the horizontal cross section of the lift pin 430 may be a rectangular shape with rounded vertices. In other words, the horizontal cross section of the lift pin 430 may be a rectangular shape with filleted vertices. The horizontal cross section shape of the lift pin 430 may correspond to the shape of the grip hole 137 of the side beam 130. The horizontal cross section of the lift pin 430 may be made slightly smaller than the size of the grip hole 137 of the side beam 130. As the horizontal cross section and the grip hole 137 of the lift pin 430 are provided in a square shape, when the lift pin 430 is inserted into the grip hole 137 to pressurize the side beam 130 in the horizontal first direction x, since the lift pin 430 and the grip hole 137 and/or the plate part 132 may come into surface contact with each other, the second gripper 400 may stably pressurize the side beam 130. Further, as the vertex part of the horizontal cross section of the lift pin 430 and the shape of the grip hole 137 are formed to be round, even if the lift pin 430 is not perfectly inserted into the center of the grip hole 137, when the lift pin 430 moves in the horizontal first direction x, the lift pin 430 may slide along the rounded portion of the grip hole 137 and be aligned with the horizontal second direction y central area of the grip hole 137, and thus the stable pressurization of the lift pin 430 may be realized. Further, as the vertex parts of the horizontal cross section of the lift pin 430 and the shape of the grip hole 137 are formed to be round, even if the lift pin 430 is inserted into the grip hole 137 at a slight angle, the problem of the side beam 130 being deformed or broken due to stress concentration at the corner portion of the lift pin 430 may be prevented. However, a shape of the cross section of the lift pin 430 is not limited thereto, and may be a circle or an ellipse, or the vertex portion may be provided in a rectangular shape that is not rounded.

The lift pin 430 may be moved in conjunction with the operation part 412. Specifically, the operation part 412 may move away from or closer to the body part 411, and the lift pin 430 connected to the operation part 412 may move together with the operation part 412.

The second gripper 400 may include the driving part 440. The driving part 440 may be secured to the body part 411. For example, as illustrated in FIG. 12 to FIG. 15, the driving part 440 may be positioned on top of the body part 411. However, the driving part 440 is not limited thereto, and may also be arranged within the body part 411.

The second gripper 400 may include a shaft 450. The shaft 450 may connect the driving part 440 and the operating part 412. The shaft 450 may transmit the driving power of the driving part 440 to the operating part 412. The operating part 412 may be moved by the operation of the driving part 440.

FIG. 20 illustrates a top plan view of the interior of a pack housing of a battery pack according to an aspect of the present disclosure. FIG 21 is an enlarged view of a portion of a battery pack according to an aspect of the present disclosure. FIG. 22 illustrates a perspective view of a portion of a pack housing and a portion of a side beam of a battery pack according to an aspect of the present disclosure.

Referring to FIG. 20 and FIG. 21, the pack housing 11 may include the guide pin 14. The guide pin 14 may protrude from the bottom part of the pack housing 11 to the upper portion. The guide pin 14 may be provided at locations corresponding to the four vertex areas of the battery cell stack assembly 100.

A guide hole 138 into which the guide pin 14 may be inserted may be formed in the lower portion of the side beam 130. The guide hole 138 may be formed on one side and the other side of the horizontal second direction y of each of the two side beams 130 of the battery cell stack assembly 100.

When the battery cell stack assembly 100 is arranged in the pack housing 11, as the guide pin 14 of the pack housing 11 is inserted into the guide hole 138 of the side beam 130, the battery cell stack assembly 100 may be guided to be seated and fixed in an appropriate position in the pack housing 11, and even if the gripper 300 is separated from the battery cell stack assembly 100, the side beams 130 of both sides of the battery cell stack assembly 100 may be maintained at a distance in the horizontal first direction x.

Referring to FIG. 22, in the state that the guide pin 14 of the pack housing 11 is inserted into the guide hole 138 of the side beam 130 so that the horizontal first direction x length of the battery cell stack assembly 100 is maintained, by passing the coupling member 140 through the mounting hole 134 and joining it to the jointing part 12 of the pack housing 11, the battery cell stack assembly 100 may be completely mounted in the pack housing 11 while the pressurization by the initial pressing unit 200 (illustrated in FIG. 6) being maintained.

Referring to FIG. 20 to FIG. 22, the pack housing 11 may include the jointing part 12. The jointing part 12 may be understood as the cross beam of the pack housing 11. The jointing part 12 may protrude from the bottom part 13 to the upper portion and may extend in the horizontal second direction y. In other words, the jointing part 12 may be extended in a direction corresponding to the extension direction of the side beam 130. In the jointing part 12, two battery cell stack assemblies 100 adjacent to each other in the horizontal first direction x may be joined.

The pack housing 11 may include the joining hole 15. The joining hole 15 may be formed through the top surface of the jointing part 12. The joining hole 15 may be formed at a position that vertically overlaps the mounting hole 134 of the side beam 130 when the battery cell stack assembly 100 is mounted in the pack housing 11. The coupling member 140 passing through the mounting hole 134 of the side beam 130 may be connected to the joining hole 15.

The pack housing 11 may include the groove 16. The groove 16 may be formed in an open shape on the top surface and side surface of the jointing part 12. However, the groove 16 is not limited thereto, and may also be formed to penetrate the top surface of the jointing part 12. The groove 16 may be formed with a rounded vertex (or corner) portion. In other words, the groove 16 may be opened at the vertex (or the corner) in the form of a part being filleted.

By the groove 16 being formed, the first pin 431 among the lift pins 430 of the second gripper 400 and the jointing part 12 may avoid interference with each other. Specifically, the first pin 431 of the second gripper 400 may protrude into the lower portion of the mounting part 133 of the side beam 130, and in this state, when the second gripper 400 carries the battery cell stack assembly 100 and mounts it into the pack housing 11, since the protruding part of the lower portion of the mounting part 133 of the first pin 431 is inserted into the groove 16, the first pin 431 and the jointing part 12 may avoid interference with each other.

The groove 16 formed corresponding to each of the two battery cell stack assemblies 100 (illustrated in FIG. 1) arranged on one side and the other side of the horizontal first direction x of the jointing part 12 may be formed at a non-overlapping location in the horizontal first direction x. Specifically, the groove 16 formed on one side of the horizontal first direction x of the jointing part 12 and the groove 16 formed on other side of the jointing part 12 in the horizontal first direction x may be formed at positions where they do not overlap each other in the horizontal first direction x. This may corresponds to, with regard to FIG. 13 and FIG. 14, that with respect to the lift pins 430 arranged in the horizontal second direction x, the first pin 431 and the second pin 432 are arranged alternately, one of the lift pins 430 facing each other in the horizontal first direction x is the first pin 431, and the other one is the second pin 432. Through this, since the horizontal first direction x thickness of the jointing part 12 may be maintained above a certain level, the structural rigidity of the jointing part 12 may be prevented from being weakened due to the groove 16.

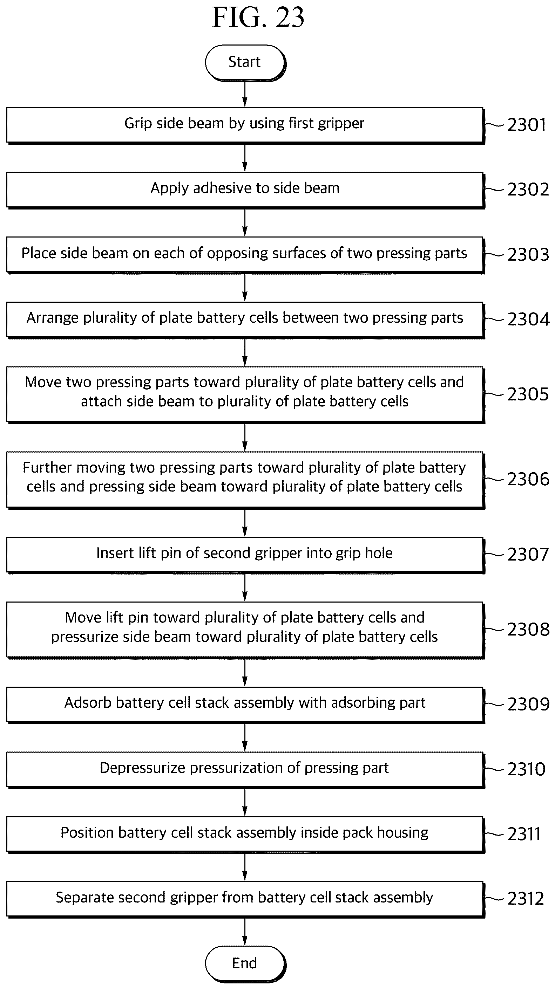

FIG. 23 is a flowchart of a method for manufacturing a battery pack according to various aspects of the present disclosure.

Hereinafter, referring to FIG. 1 to FIG. 22, a method for manufacturing the battery pack 10 illustrated in FIG. 23 is described.

The method for manufacturing the battery pack 10 may include the method for manufacturing the battery cell stack assembly 100 (operation 2301 to operation 2306).

For example, in operation 2301 and operation 2302, the method of manufacturing the battery cell stack assembly 100 may include applying adhesive A to the surface of the side beam 130 facing the plurality of plate battery cells 110 in a state where the side beam 130 is gripped by the first gripper 300 connected to the multi-joint robot R1. In the operation, the side beam 130 may be rotated at various angles by the multi-joint robot R1. In order to easily apply adhesive A to the side beam 130, the side beam 130 may be rotated by the multi-joint robot R1 so that the side of the side beam 130 facing the plurality of plate battery cells 110 faces upward.

In operation 2303, the method of manufacturing the battery cell stack assembly 100 may include the operation of placing the side beam 130 on each of the opposing surfaces of two pressing parts 210. Here, by a temporary fixing hole (not illustrated), the mounting hole 134 or the grip hole 137 formed on the lower surface of the mounting part 133 of the side beam 130 being secured to the protruding pin 240, the position of the side beam 130 may be guided. The side beam 130 may be fixed to the inner side surface of the pressing part 210 by being air-adsorbed on each of the opposing surfaces of the two pressing parts 210. The air-adsorbing of the side beam 130 may be achieved by the air suctioning part 230 provided in the pressing part 210.

In operation 2304, the method of manufacturing the battery cell stack assembly 100 may include the operation of arranging the plurality of plate battery cells 110 between two pressing parts 210 on the pallet 220. In the operation, the battery cell stack assembly 100 may be arranged between two side beams 130 that are adsorbed by two pressing parts 210.

Alternatively, the operation of arranging the plurality of plate battery cells 110 may be performed before supplying the side beam 130 to the pressing unit 200, or the two operations may be performed simultaneously.

In operation 2305, the method of manufacturing the battery cell stack assembly 100 may include the operation of moving two pressing parts 210 toward the plurality of plate battery cells 110 and attaching the side beam 130 to the plurality of plate battery cells 110. Specifically, the side beam 130 moves toward the plurality of plate battery cells 110 as the pressing part 210 moves, and the plurality of plate battery cells 110 may be attached to the side beam 130 by adhesive A applied to the surface facing the plurality of plate battery cells 110.

In operation 2306, the method of manufacturing the battery cell stack assembly 100 may include the operation of further moving the two pressing parts 210 toward the plurality of plate battery cells 110 and pressing the side beam 130 toward the plurality of plate battery cells 110. The pressurization of the side beam 130 may be performed until the time that the length of the horizontal first direction x of the battery cell stack assembly 100 reaches the required level. For example, pressurization of the side beam 130 may be done until that when the battery cell stack assembly 100 is mounted in the pack housing 11 (illustrated in FIG. 1), the horizontal first direction x length of the battery cell stack assembly 100 corresponds to the length in which the two side beams 130 of the battery cell stack assembly 100 are joined to the jointing part 12 (illustrated in in FIG. 1) of the pack housing 11 (illustrated in in FIG. 1).

Next, the method of manufacturing the battery pack 10 may include the operation of, after manufacturing the battery cell stack assembly 100 by operation 2301 to operation 2306, inserting the lift pin 430 into the grip hole 137 formed in the side beam 130 while pressing the second gripper 400 onto the battery cell stack assembly 100 in operation 2307. Here, the battery cell stack assembly 100 may be pressurized in the horizontal first direction x by the pressing unit 200.

In operation 2308, the method of manufacturing the battery pack 10 may include the operation of moving the lift pin 430 toward the plurality of plate battery cells 110 and pressurizing the side beam 130 toward the plurality of plate battery cells 110 with the lift pin 430. Through this, even when the two pressing parts 210 of the pressing unit 200 are spread outward and the pressurization by the pressing unit 200 is released, the pressurized state of the battery cell stack assembly 100 may be maintained.

In operation 2309, the method of manufacturing the battery pack 10 may include the operation of adsorbing the top surface of the battery cell stack assembly 100 with the adsorbing part 420 equipped on the second gripper 400. By the adsorbing part 420 adsorbing the battery cell stack assembly 100, the battery cell stack assembly 100 may be lifted by the second gripper 400.

When the adsorption operation by the adsorbing part 420 is performed before the pressurization operation by the pressing unit 200, there may be a possibility that the adsorbing part 420 made of sponge material is stuck between the plate battery cells 110, and thus after the battery cell stack assembly 100 is sufficiently pressurized by the pressing unit 200, it may be desirable to perform an adsorption operation by the adsorbing part 420.

Meanwhile, in various aspects, the operation of adsorbing the top surface of the battery cell stack assembly 100 with the adsorbing part 420 may be performed prior to the operation of pressurizing the side beam 130 toward the plurality of plate battery cells 110 with the lift pin 430, and may be performed simultaneously with the operation of pressurizing the side beam 130 toward the plurality of plate battery cells 110 with the lift pin 430, and may be performed after the operation of pressurizing the side beam 130 toward the plurality of plate battery cells 110 with the lift pin 430.

In operation 2310, the method of manufacturing the battery pack 10 may include a depressurization operation of the pressing part 210. In this operation, in order to prevent the protruding pin 240 inserted into the temporary fixing hole (not illustrated) formed on the lower surface of the mounting part 133 of the side beam 130 by protruding from the upper portion of the pressing part 210, the mounting hole 134 or the grip hole 137 from interfering with the side beam 130, the protruding pin 240 may be lowered and introduced into the pressing part 210.

In operation 2311, the method of manufacturing the battery pack 10 may include the operation of moving the battery cell stack assembly 100 gripped by the second gripper 400 and positioning it inside the pack housing 11. In the operation, the battery cell stack assembly 100 may be arranged so that the guide pin 14 of the pack housing 11 is inserted into the guide hole 138 of the side beam 130.

In operation 2312, the method of manufacturing the battery pack 10 may include an operation of separating the second gripper 400 from the battery cell stack assembly 100.

The method of manufacturing the battery pack 10 may include further operation of joining the coupling member 140 (illustrated in FIG. 1) to the jointing part of the pack housing 11 by penetrating the mounting hole 134.

Any aspect described in the present disclosure or other aspects are not mutually exclusive or distinct. In the above described aspects of the present disclosure, or in other aspects, each of components or functions may be used together or combined.

For example, component A described in a specific aspect and/or drawings may be combined with component B in another aspect and/or drawings. In other words, even if a combination between the components is not directly descried, the combination may be possible except for the case where it is explained that the combination is impossible.

The above detailed description should not be construed as restrictive in all respects and should be considered as illustrative. The scope of the present disclosure should be determined by a reasonable interpretation of the appended claims, and all modifications within the equivalent scope of the present disclosure are included in the scope of the present disclosure.

## Claims

1. A battery cell stack assembly comprising:
a plurality of plate battery cells stacked in a horizontal first direction; and
side beams jointed to one side and another side of the plurality of plate battery cells in the horizontal first direction.

2. The battery cell stack assembly of claim 1,
wherein the side beams include a plate part, and a mounting part protruding from the plate part in a direction opposite the plurality of plate battery cells,
wherein mounting holes are formed in a vertical direction in the mounting part.

3. The battery cell stack assembly of claim 2,
wherein the mounting part extends in a horizontal second direction orthogonal to the horizontal first direction.

4. The battery cell stack assembly of claim 2,
wherein the mounting part is formed at a position higher than a middle height of the plate part.

5. The battery cell stack assembly of claim 2,
wherein the side beams include a cover part provided on an upper portion of the mounting part,
wherein the cover part includes a top surface extending from the plate part in the direction opposite the plurality of plate battery cells, and a side surface extending from an edge of the top surface to a lower portion and connected to a surface of the upper portion of the mounting part.

6. The battery cell stack assembly of claim 2,
wherein the side beams include a grip hole formed by vertically penetrating the mounting part,
wherein the grip hole is square shaped with a rounded vertex.

7. The battery cell stack assembly of claim 1,
further comprising a busbar frame assembly joined to one side and another side of the plurality of plate battery cells in the horizontal second direction orthogonal to the horizontal first direction,
wherein the busbar frame assembly comprises a pin protruding from each of the one side and the another side of the busbar frame assembly in the horizontal first direction, and
wherein a hole into which the pin is inserted is formed in the side beam.

8. The battery cell stack assembly of claim 7,
wherein the pin has a chamfered shape at a corner of an end.

9. The battery cell stack assembly of claim 7,
wherein the pin includes a portion having a cross section that becomes smaller at a distance farther away from the busbar frame assembly.

10. The battery cell stack assembly of claim 1,
wherein the side beams are bonded to the plurality of plate battery cells by an adhesive.

11. A method of manufacturing a battery cell stack assembly comprising a
plurality of plate battery cells stacked in a horizontal first direction and side beams jointed to one side and another side of the plurality of plate battery cells in the horizontal first direction, by using a pressing unit, wherein the pressing unit includes a pallet, and two pressing parts positioned opposite each other on the pallet and configured to move in opposite directions,
the method comprising:
attaching the side beams to surfaces of the two pressing parts that face one another, and arranging the plurality of battery cells between the two pressing parts on the pallet; and
moving the two pressing parts toward the plurality of plate battery cells and attaching the side beams to the plurality of plate battery cells and pressing the side beams toward the plurality of plate battery cells.

12. The method of manufacturing the battery cell stack assembly of claim 11, wherein
the side beams are gripped by a multi-joint robot and supplied to the pressing unit,
and wherein the method further comprises applying an adhesive to a surface of the side beams facing the plurality of plate battery cells before attaching the side beams to surfaces of the two pressing parts and while the side beams are gripped by the multi-joint robot.

13. The method of manufacturing the battery cell stack assembly of claim 11, wherein the side beams include a plate part, and a mounting part protruding from the plate part in a direction opposite the plurality of plate battery cells, and
wherein a top border of the two pressing parts is provided lower than a lower border of the mounting part.

14. The method of manufacturing the battery cell stack assembly of claim 11, wherein the side beams include a plate part, and a mounting part protruding from the plate part in a direction opposite the plurality of plate battery cells, and
wherein the pressing unit includes a protruding pin protruding from an upper portion of the pressing part, and
wherein a temporary fixing hole into which the protruding pin is configured to be inserted is formed on a lower surface of the mounting part.

15. The method of manufacturing the battery cell stack assembly of claim 14, wherein the protruding pin is configured to descend into the pressing part.

16. The method of manufacturing the battery cell stack assembly of claim 11, wherein the side beams include a plate part, a mounting part protruding from the plate part in a direction opposite the plurality of plate battery cells, and a grip hole formed by vertically penetrating the mounting part, wherein the side beams are configured to be gripped by a first gripper provided at an end of a multi-joint robot and supplied to the pressing unit, wherein the first gripper includes a body and a gripper pin protruding from the body to a lower portion, and
wherein the side beams are configured to be gripped by the gripper by the gripper pin being inserted into the grip hole.

17. The method of manufacturing the battery cell stack assembly of claim 16, wherein a plurality of grip holes are formed, and are arranged in a horizontal second direction orthogonal to the horizontal first direction, wherein a plurality of gripper pins are provided and arranged in the horizontal second direction,
wherein at least two gripper pins among the plurality of gripper pins are configured to move in directions opposite to each other, and
wherein the side beams are configured to be gripped by the gripper by the at least two gripper pins moving closer or further away from each other after being inserted into the grip hole.

18. The method of manufacturing the battery cell stack assembly of claim 16, wherein a horizontal cross section of the grip hole and of the gripper pin is a rectangular shape with a rounded vertex.

19. The method of manufacturing the battery cell stack assembly of claim 11, wherein,
when attaching the side beams to the surfaces of the two pressing parts that face one another,
the side beams are attached using air suctioning.
